# EUROPÄISCHE PATENTANMELDUNG

(11) **EP 0 949 786 A1**
(43) Veröffentlichungstag der Anmeldung: **13.10.1999**
(21) Anmeldenummer: 98120984.4
(22) Anmeldetag: 05.11.1998
(51) Int. Cl.: H04L 27/06, G06K 7/00

(54) **Schaltungsanordnung zur ASK-Demodulation für eine kontaktlose Chipkarte**

(71) Anmelder: SIEMENS AKTIENGESELLSCHAFT, 80333 München (DE)
(72) Erfinder: Fibranz, Heiko, 81377 München (DE)

(57) **Zusammenfassung**

Es wird eine Schaltungsanordnung zur Demodulation einer durch Wechsel der Amplituden zwischen einem niedrigen und einem hohen Pegel (ASK-) modulierten Spannung, insbesondere für eine Chipkarte, beschrieben, die einen Bandpaßfilter (4) zur Unterdrückung von im Vergleich zu der Modulationsfrequenz niederfrequenten Störungen, zur Unterdrückung der Trägerfrequenz und zur Erzeugung jeweils eines Impulses bei einem Wechsel der Amplituden zwischen dem niedrigen und dem hohen Pegel, sowie einen Schwellwertschalter (5) aufweist, mit dem durch Beaufschlagung mit den Impulsen und Umschaltung zwischen zwei Zuständen die demodulierte Spannung erzeugt wird.

## Beschreibung

Die Erfindung betrifft eine Schaltungsanordnung zur Demodulation einer durch Wechsel der Amplituden zwischen einem niedrigen und einem hohen Pegel (ASK-) modulierten Spannung, insbesondere für eine Chipkarte.

Chipkarten, die anstelle eines Magnetstreifens einen elektronischen Chip aufweisen, haben aufgrund ihrer wesentlich höheren Leistungsfähigkeit und den damit verbundenen vielfältigeren Einsatzmöglichkeiten eine zunehmende Bedeutung erlangt. Da die Chipkarten nach dem Einführen in ein Karten-Schreib/Lesegerät kontaktlos betrieben werden, ist es erforderlich, die auf der Chipkarte empfangene Spannung nicht nur zu demodulieren, sondern daraus auch die für den Chip erforderliche Versorgungsspannung zu gewinnen.

Zur digitalen Datenübertragung von dem Karten-Schreib/Lesegerät zur Chipkarte sind verschiedene Modulationsverfahren bekannt. Neben dem OOK-Verfahren (On-Off-Keying) findet besonders häufig eine Modulation durch Amplitudenwechsel (Umschaltung) zwischen zwei Pegeln (ASK - Amplitude Shift Keying) statt, und zwar im allgemeinen im Bereich von acht bis zwölf Prozent der Gesamtamplitude und mit einer NRZ-Codierung (Non Return to Zero).

An den auf der Chipkarte befindlichen Demodulator werden dabei besondere Anforderungen gestellt, da sich Bewegungen der Karte im Sendefeld des Karten-Schreib/Lesegerätes aufgrund der dadurch verursachten Schwankungen der Empfangsfeldsstärke wie eine Modulation auswirken, jedoch von dieser unterschieden werden müssen. Dies hat zur Folge, daß die Demodulatorschaltung z.B. 10 %ige Pegelschwankungen mit unterschiedlicher Dauer (NRZ-Codierung) bei Feldstärkeschwankungen unterschiedlicher Dauer demodulieren können muß, die um ein Vielfaches größer sind, als die eigentliche Amplitudenmodulation. Folglich ist auch der Dynamikbereich des zu demodulierenden Signals relativ groß.

Der Erfindung liegt deshalb die Aufgabe zugrunde, eine Schaltungsanordnung zur ASK-Demodulation der eingangs genannten Art anzugeben, mit der insbesondere bei starken Schwankungen der Empfangsfeldstärke eine zuverlässige Demodulation der enthaltenen Datensignale möglich ist.

Gelöst wird diese Aufgabe mit einer Schaltungsanordnung der eingangs genannten Art, die sich auszeichnet durch einen Bandpaßfilter zur Unterdrückung von im Vergleich zu der Modulationsfrequenz niederfrequenten Störungen, zur Unterdrückung der Trägerfrequenz und zur Erzeugung jeweils eines Impulses bei einem Wechsel der Amplituden zwischen dem niedrigen und dem hohen Pegel, sowie einen Schwellwertschalter, mit dem durch Beaufschlagung mit den Impulsen und Umschaltung zwischen zwei Zuständen die demodulierte Spannung erzeugt wird.

Ein besonderer Vorteil dieser Lösung besteht darin, daß aufgrund der Auswertung der Flanken der modulierten Empfangsspannung kein Mittelwert ermittelt und gespeichert werden muß. Damit entfällt auch die bei jeder Feldstärkeschwankung erforderliche erneute Berechnung des Mittelwertes, so daß der Schaltungsaufwand wesentlich geringer ist.

Die Unteransprüche haben vorteilhafte Weiterbildungen der Erfindung zum Inhalt.

Danach ist der Bandpaßfilter vorzugsweise so eingestellt, daß bei einem Wechsel der Amplituden von dem hohen zu dem niedrigen Pegel ein negativer Impuls und bei einem Wechsel der Amplituden von dem niedrigen zu dem hohen Pegel ein positiver Impuls erzeugt wird. Der Schwellwertschalter ist vorzugsweise ein Schmitt-Trigger, dessen obere und untere Schaltschwelle jeweils so gewählt ist, daß er durch den positiven bzw. negativen Impuls umgeschaltet wird.

Weitere Einzelheiten, Merkmale und Vorteile der Erfindung ergeben sich aus der folgenden Beschreibung einer bevorzugten Ausführungsform anhand der Zeichnung. Es zeigt:
- Fig. 1: ein Blockschaltbild der Ausführungsform;
- Fig. 2: die Durchlaßcharakteristik des eingesetzten Bandpaßfilters;
- Fig. 3a bis 3c: Spannungsverläufe des Datensignals, des modulierten Empfangssignals und des Signals am Ausgang des Bandfilters;
- Fig. 4a: den Verlauf der Ausgangsspannung des Bandfilters in Relation zu den Schaltschwellen eines Schmitt-Triggers; und
- Fig. 4b: den Verlauf der Ausgangsspannung des Schmitt-Triggers.

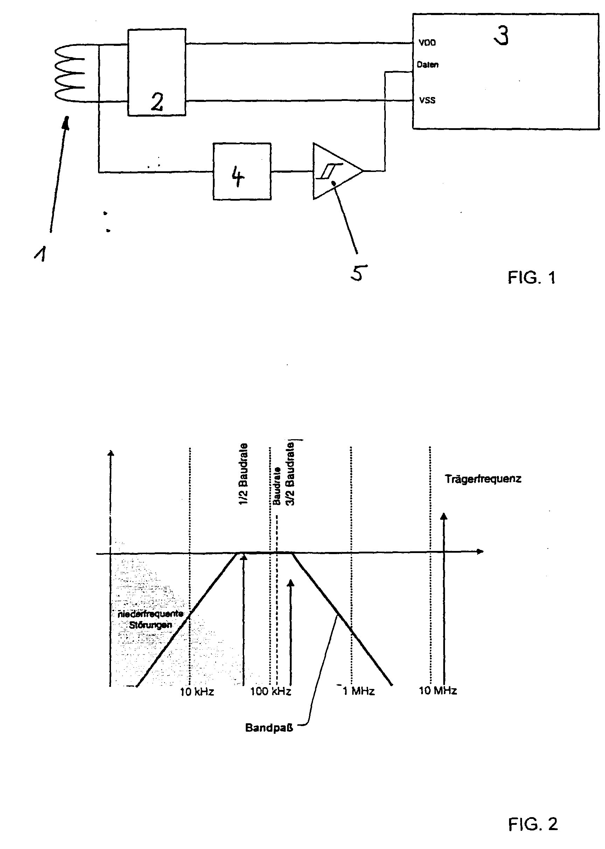

Figur 1 zeigt ein Blockschaltbild einer Empfangs- und Auswerteschaltung zur Realisierung auf einer Chipkarte.

In einer Induktivität 1 wird durch das von einem Karten-Schreib/Lesegerät erzeugte elektromagnetische Feld eine modulierte Empfangsspannung induziert, wenn die Karte in das Gerät eingeführt ist. Diese Spannung wird mit einem Gleichrichter 2 gleichgerichtet und gegebenenfalls mit einem Spannungsregler (nicht dargestellt) so geregelt, daß sie zur Versorgung einer digitalen Schaltung 3 zum Betrieb der Chipkarte geeignet ist.

Die Wiedergewinnung des Datensignals aus der modulierten Empfangsspannung erfolgt mit einem Bandpaßfilter 4 und einem nachgeschalteten Schmitt-Trigger 5.

Die Durchlaßcharakteristik des Bandpaßfilters 4 ist in Figur 2 gezeigt. Der Filter ist so dimensioniert, daß sowohl die niederfrequenten Störungen, die durch Feldstärkeschwankungen infolge einer Bewegung der Karte hervorgerufen werden, als auch die Trägerfrequenz herausgefiltert werden.

Das Maximum der Durchlaßkurve erstreckt sich im dargestellten Fall im wesentlichen zwischen einem Halben und drei Vierteln der Baudrate. Die Trägerfrequenz liegt bei 10 MHz und wird somit ebenso beseitigt, wie der Gleichspannungsanteil des Modulationssignals.

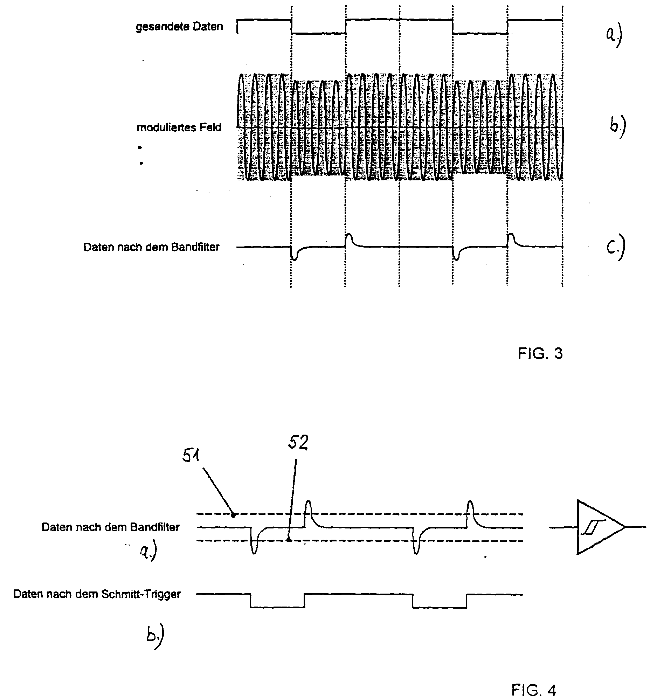

Figur 3 zeigt die entsprechenden Spannungsverläufe. Gemäß Figur 3a sind die zu sendenden Daten als Folge von logischen Werten mit niedrigen und hohen Pegeln kodiert. Mit dieser Datenspannung wird eine Trägerfrequenz gemäß Figur 3b moduliert, und zwar durch eine entsprechende Umschaltung (Wechsel) der Amplituden zwischen einem niedrigen und einem hohen Pegel (ASK-Modulation). Die Modulationstiefe beträgt dabei im allgemeinen etwa 10%. Diese Trägerfrequenz induziert in der Induktivität 1 die Empfangsspannung, die über den Bandpaßfilter 4 geführt wird. Dieser Bandpaßfilter ist so eingestellt, daß er die Flanken der modulierten Empfangsspannung detektiert. Dabei wird bei einer abfallenden Flanke ein negativer Impuls und bei einer ansteigenden Flanke ein positiver Impuls erzeugt. Der entsprechende Spannungsverlauf am Ausgang des Bandpaßfilters ist in Figur 3c gezeigt.

Aus dieser Impulsspannung wird dann mit einem Schwellwertschalter, zum Beispiel dem in Figur 1 gezeigten SchmittTrigger 5, das Datensignal wiedergewonnen. Die Schaltschwellen 51, 52 sind dabei gemäß Figur 4a so gelegt, daß der Ruhepegel der Impulsspannung zwischen diesen Schaltschwellen liegt, wobei ein positiver Impuls die obere Schaltschwelle 51 übersteigt und ein negativer Impuls die untere Schaltschwelle 52 unterschreitet.

Dies hat zur Folge, daß durch einen positiven Impuls das demodulierte Signal gemäß Figur 4b am Ausgang des Schmitt-Triggers einen hohen logischen Pegel ("1"-Pegel) annimmt, bis ein negativer Impuls anliegt, durch den das demodulierte Signal einen niedrigen logischen Pegel ("0"-Pegel) erhält.

## Patentansprüche

1. Schaltungsanordnung zur Demodulation einer durch Wechsel der Amplituden zwischen einem niedrigen und einem hohen Pegel (ASK-) modulierten Spannung, insbesondere für eine Chipkarte, **gekennzeichnet durch** einen Bandpaßfilter (4) zur Unterdrückung von im Vergleich zu der Modulationsfrequenz niederfrequenten Störungen, zur Unterdrückung der Trägerfrequenz und zur Erzeugung jeweils eines Impulses bei einem Wechsel der Amplituden zwischen dem niedrigen und dem hohen Pegel, sowie einen Schwellwertschalter (5), mit dem durch Beaufschlagung mit den Impulsen und Umschaltung zwischen zwei Zuständen die demodulierte Spannung erzeugt wird.

2. Schaltungsanordnung nach Anspruch 1,
**dadurch gekennzeichnet,** dass der Bandpaßfilter (4) so eingestellt ist, daß bei einem Wechsel der Amplituden von dem hohen zu dem niedrigen Pegel ein negativer Impuls und bei einem Wechsel der Amplituden von dem niedrigen zu dem hohen Pegel ein positiver Impuls erzeugt wird.

3. Schaltungsanordnung nach Anspruch 2,
**dadurch gekennzeichnet,** dass der Schwellwertschalter (5) ein Schmitt-Trigger ist, dessen obere und untere Schaltschwelle (51, 52) jeweils so gewählt ist, daß er durch den positiven bzw. negativen Impuls umgeschaltet wird.
